# EUROPEAN PATENT APPLICATION

(11) **EP 2 977 902 A2**
(43) Date of publication of application: **27.01.2016**
(21) Application number: 15177539.2
(22) Date of filing: 20.07.2015
(51) Int. Cl.: G06F 9/50

(54) **METHOD AND DEVICE FOR SAVING STORAGE SPACE**

(30) Priority: 23.07.2014 CN 201410353668
(71) Applicant: Xiaomi Inc., Beijing 100085 (CN)
(72) Inventor: RU, Yi, 100085 BEIJING (CN); LIU, Huadong, 100085 BEIJING (CN); WANG, Aijun, 100085 BEIJING (CN); SHEN, Xianchao, 100085 BEIJING (CN); ZHANG, Jun, 100085 BEIJING (CN)
(74) Representative: Delumeau, François Guy

(57) **Abstract**

The present invention generally relates to a method and a device for saving storage space, pertaining to the field of communication. The method includes: determining (S11) an application to be backed up in applications installed locally; sending (S12) an installation package and data related to the determined application to a server for back-up; uninstalling (S13) locally the application and reserving an icon of the application. The device includes: a determination module, a backup module and an uninstall module. The present invention has the advantages of effectively saving storage space, avoiding the application from occupying storage space for a long time, and reducing waste of storage space.

## Description

### TECHNICAL FIELD

The present invention generally relates to the field of communication, and more particularly, to a method and a device for saving storage space.

### BACKGROUND

Various applications are generally installed on an intelligent device. The frequency of utilization of some applications is relatively high. However, some other applications are less frequently used, for example, having not been used for one month or even several months. As for an intelligent device, these applications less frequently used occupy storage space for a long time. And the storage space of the intelligent device is seriously wasted if there are several applications less frequently used.

### SUMMARY

In view of this, the present invention provides a method and device for saving storage space.

According to the first aspect of the embodiments of the present invention, there is provided a method for saving storage space, comprising:
determining an application to be backed up in (i.e. among) applications installed locally;
sending an installation package and data related to the determined application to a server for back-up; and
uninstalling locally the application and reserving an icon of the application.
Optionally, the method also comprises:
downloading the installation package and data from the server when the reserved icon is clicked on;
recovering the installation of the application by using the installation package and data, and initiating the application.
Optionally, determining an application to be backed up in applications installed locally comprises at least one of the followings:
in applications installed locally, determining an application unused within a designated duration as an application to be backed up;
in applications installed locally, determining an application used below an assigned frequency within a designated period as an application to be backed up; and
in applications installed locally, determining an application designated by users as an application to be backed up.

Optionally, sending an installation package and data related to the determined application to a server for back-up comprises:
querying in the server whether the application has been backed up during installation;
sending an installation package and data relating to the application to a server for back-up if it is confirmed in the server that the application has not been backed up during installation.

Optionally, the data comprises: data related to the application as being stored in a memory; or the data comprises: data related to the application as being stored in a memory and in a cache.

According to the second aspect of the embodiments of the present invention, there is provided a device for saving storage space, comprising:
a determination module, configured to determine an application to be backed up in applications installed locally;
a backup module, configured to send an installation package and data related to the determined application to a server for back-up; and
an uninstall module, configured to uninstall locally the application and reserve an icon of the application.

Optionally, the device also comprises:
a recovery module, configured to download the installation package and data from the server when the reserved icon is clicked on; recover the installation of the application by using the installation package and data, and initiate the application.

Optionally, the determination module comprises at least one of:
a first determination unit, configured to determine, in applications installed locally, an application unused within a designated duration as an application to be backed up;
a second determination unit, configured to determine, in applications installed locally, an application used below an assigned frequency within a designated period as an application to be backed up; and
a third determination unit, configured to determine, in applications installed locally, an application designated by users as an application to be backed up.

Optionally, the backup module comprises:
a query unit, configured to query in the server whether the application has been backed up during installation;
a backup unit, configured to send an installation package and data related to the application to a server for back-up if it is confirmed in the server that the application has not been backed up during installation.

Optionally, the data comprises: data related to the application as being stored in a memory; or the data comprises: data related to the application as being stored in a memory and in a cache.

According to the third aspect of the embodiments of the present disclosure, there is provided a device for saving storage space, comprising:
a processor and a memory configured to store instructions executable by the processor;
wherein, the processor is configured to:
determine an application to be backed up in applications installed locally;
send an installation package and data related to the determined application to a server for back-up;
uninstall locally the application and reserve an icon of the application.

The technical solution according to the embodiments of the present invention may have following beneficial effects: determining an application to be backed up in applications installed locally; sending an installation package and data related to the determined application to a server for back-up; uninstalling locally the application and reserving an icon of the application, thus effectively saving storage space, avoiding the application from occupying storage space for a long time, and reducing waste of storage space.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method for saving storage space according to an exemplary embodiment.
Fig. 2 is a flow chart showing a method for saving storage space according to another exemplary embodiment.
Fig. 3 is a flow chart showing a method for saving storage space according to another exemplary embodiment.
Fig. 4 is a block diagram showing a device for saving storage space according to another exemplary embodiment.
Fig. 5 is a block diagram showing a device for saving storage space according to another exemplary embodiment.
Fig. 6 is a block diagram showing a device for saving storage space according to another exemplary embodiment.
Fig. 7 is a block diagram showing a device for saving storage space according to another exemplary embodiment.
Fig. 8 is a block diagram showing a device for saving storage space according to another exemplary embodiment.

### DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

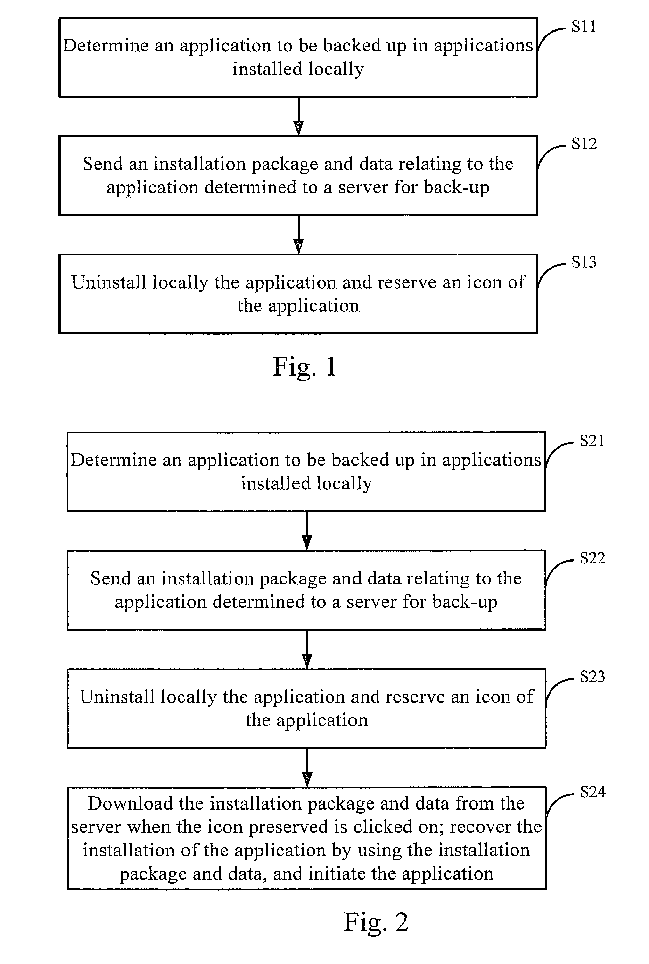

Fig. 1 is a flow chart showing a method for saving storage space according to an exemplary embodiment, as shown in Fig.1, the method is for use in a terminal, comprising following steps:

In Step 511, an application to be backed up is determined in applications installed locally.

In the embodiment, the terminal may be a terminal of any type, including but not limited: a computer, a laptop, a mobile phone, a tablet computer and the like. A plurality of applications may be installed in the terminal, and the determined application to be backed up may be one application or a plurality of applications, not limited herein.

In Step S12, an installation package and data related to the determined application are sent to a server for back-up.

The installation package of the application is used to install the application, and data related to the application refer to data generated in the using process of the application, for example, personal information, status information, progress information and the like saved by users in application, to which the embodiment makes no concrete restriction.

In Step S13, the application is uninstalled locally and an icon of the application is reserved.

Storage space of the application in a terminal may then be saved by uninstalling the application, and waste of storage space may be effectively avoided. Users will not be confused because they do not perceive that the application has been uninstalled as an icon of the application uninstalled is reserved on the desktop, which is more in line with users' usage habits.

In the embodiment, optionally, the foregoing method may also comprise:
downloading the installation package and data from the server when the reserved icon is clicked on;
recovering the installation of the application by using the installation package and data, and initiating the application.
In the embodiment, optionally, the determining an application to be backed up in applications installed locally comprises at least one of followings:
in applications installed locally, determining an application unused within a designated duration as an application to be backed up;
in applications installed locally, determining an application used below an assigned frequency within a designated period as an application to be backed up; and
in applications installed locally, determining an application designated by users as an application to be backed up.
In the embodiment, optionally, sending an installation package and data related to the determined application to a server for back-up comprises:
querying in the server whether the application has been backed up during installation;
sending an installation package and data related to the application to a server for back-up if it is confirmed in the server that the application has not been backed up during installation.

In the embodiment, optionally, the data comprises: data related to the application as being stored in a memory; or the data comprises: data related to the application as being stored in a memory and in a cache.

The method according to the embodiment is characterized by: determining an application to be backed up in applications installed locally; sending an installation package and data related to the determined application to a server for back-up; uninstalling locally the application and reserving an icon of the application, thus effectively saving storage space, avoiding the application from occupying storage space for a long time, and reducing waste of storage space.

Fig. 2 is a flow chart showing a method for saving storage space according to another exemplary embodiment, as shown in Fig.2, the method is for use in a terminal, comprising following steps:

In Step S21, an application to be backed up is determined in applications installed locally.

In the embodiment, optionally, the Step 21 may comprise at least one of followings:

in applications installed locally, determining an application unused within a designated duration as an application to be backed up;

in applications installed locally, determining an application used below an assigned frequency within a designated period as an application to be backed up; and

in applications installed locally, determining an application designated by users as an application to be backed up.

In Step S22, an installation package and data related to the determined application are sent to a server for back-up.

In the embodiment, optionally, the data comprises: data related to the application as being stored in a memory of the terminal; or the data comprises: data related to the application as being stored in a memory and in a cache of the terminal.

Such data related to the application as being stored in a cache generally is temporary information saved by users in the using process of the application, and the temporary information may be backed up in the server so that the information can be retrieved in recovery installation of the application, thus ensuring that an application after recovery installation stays the same as the application before uninstallation.

In the embodiment, optionally, the Step 22 may comprise:

querying in the server whether the application has been backed up during installation;

sending an installation package and data related to the application to a server for back-up if it is confirmed in the server that the application has not been backed up during installation.

In Step S23, the application is uninstalled locally and an icon of the application is reserved.

In Step S24, the installation package and data are downloaded from the server when the reserved icon is clicked on; the installation of the application is recovered by using the installation package and data, and the application is initiated.

In the embodiment, the reserved icon of the application uninstalled not only is a shortcut of the application, but also is a start button for reinstalling the application. The installation is triggered and the application is initiated after users click on the icon. The installation of the application is completed by fast downloading a backup installation package and data related to the application from a server, and the application is immediately started after completion of the installation. In this way, users may not perceive the installation process of the application, they just feel like starting the application, thus avoiding disturbing users, effectively reducing negative effect on users and greatly improving user experience.

The method according to the embodiment is characterized by: determining an application to be backed up in applications installed locally; sending an installation package and data related to the determined application to a server for back-up; uninstalling locally the application and reserving an icon of the application, thus effectively saving storage space, avoiding the application from occupying storage space for a long time, and reducing waste of storage space.

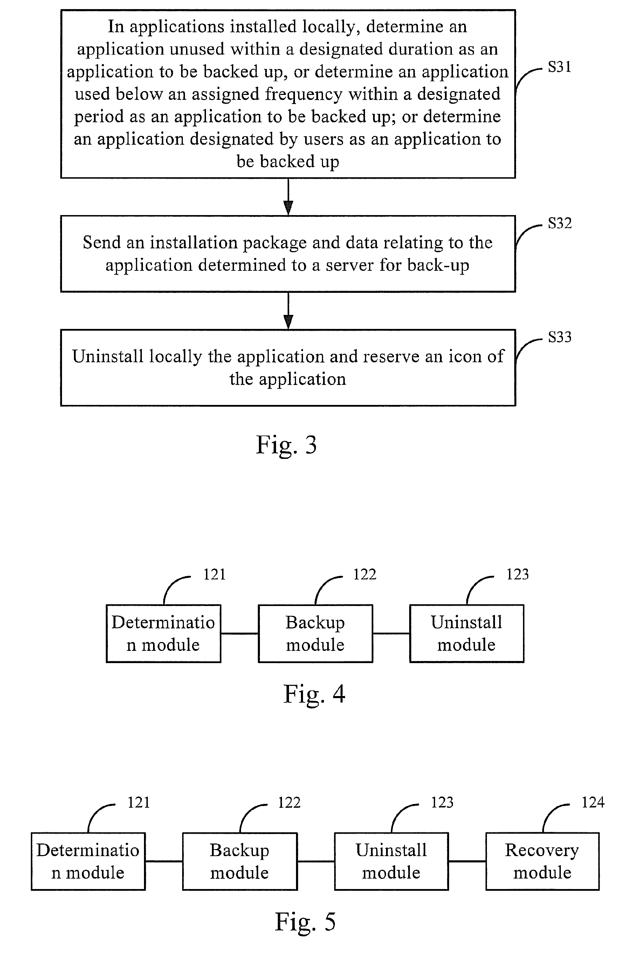

Fig. 3 is a flow chart showing a method for saving storage space according to another exemplary embodiment, as shown in Fig.3, the method is for use in a terminal, comprising following steps:

In Step S31, in applications installed locally, an application unused within a designated duration is determined as an application to be backed up, or an application used below an assigned frequency within a designated period is determined as an application to be backed up; or an application designated by users is determined as an application to be backed up.

The designated duration, the designated period and the assigned frequency may be set according to the need, to which the embodiment makes no concrete restriction.

The application unused within a designated duration refers to an application not used for a long time, which may be backed up and uninstalled, thus saving storage space, and not causing an impact on users. For example, an application not used within eight days, ten days, one month or three months is an application not used for a long time.

The application used below an assigned frequency within a designated period refers to an application with a lower frequency of utilization, which may also be backed up and uninstalled, thus saving storage space, and not causing an impact on users. For example, an application used below three times within two months, or an application used below six times within half a year, etc.

An application to be backed up which is determined in the above two contexts is determined in the background, beyond the perception of users (i.e. without the user's knowing). In another context, users may take the initiative to determine an application to be backed up. An application list is provided to users. And users may select corresponding applications for back-up according to the need. In this way, applications selected by users may be backed up and uninstalled, thus reaching the effect of effectively saving storage space.

In Step S32, an installation package and data related to the determined application are sent to a server for back-up.

In the embodiment, optionally, the Step may comprise:

querying in the server whether the application has been backed up during installation;

sending an installation package and data related to the application to a server for back-up if it is confirmed in the server that the application has not been backed up during installation.

When the application is installed for the first time, the terminal may back up an installation package and data related to the application in the server. Before the application is backed up, it is necessary to query in the server whether the application has been backed up or not. It is unnecessary to back up the installation package if the application has been backed up, thus improving the transmission efficiency. Under those circumstances, only data related to the application needs backing up in the server. If the application has not been backed up yet, both the installation package and data related to the application shall be sent to the server for back-up.

In Step S33, the application is uninstalled locally and an icon of the application is reserved.

In the embodiment, optionally, the foregoing method may also comprise:
downloading the installation package and data from the server when the reserved icon is clicked on;
recovering the installation of the application by using the installation package and data, and initiating the application.

In the embodiment, optionally, the data comprises: data related to the application as being stored in a memory; or the data comprises: data related to the application as being stored in a memory and in a cache.

The method according to the embodiment is characterized by: determining an application to be backed up in applications installed locally; sending an installation package and data related to the determined application to a server for back-up; uninstalling locally the application and reserving an icon of the application, thus effectively saving storage space, avoiding the application from occupying storage space for a long time, and reducing waste of storage space.

Fig. 4 is a block diagram showing a device (e.g. a terminal) for saving storage space according to another exemplary embodiment. Referring Fig. 4, the device includes: a determination module 121, a backup module 122 and an uninstall module 123.

The determination module 121 is configured to determine an application to be backed up in applications installed locally.

The backup module 122 is configured to send an installation package and data related to the determined application to a server for back-up.

The uninstall module 123 is configured to uninstall locally the application and reserve an icon of the application.

Fig. 5 is a block diagram showing a device for saving storage space according to another exemplary embodiment. Referring to Fig. 5, wherein optionally, the foregoing device may also comprise:
a recovery module 124, configured to download the installation package and data from the server when the reserved icon is clicked on; the installation of the application is recovered by using the installation package and data, and the application is initiated.

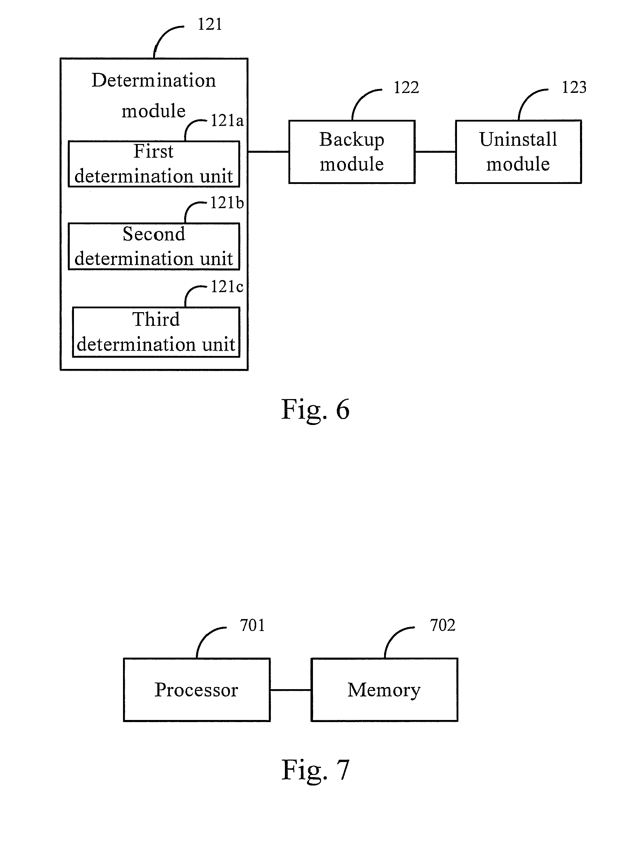

Fig. 6 is a block diagram showing a device for saving storage space according to another exemplary embodiment. Referring to Fig. 6, optionally, the determination module 121 may comprise at least one of:
a first determination unit 121a, configured to determine, in applications installed locally, an application unused within a designated duration as an application to be backed up;
a second determination unit 121b, configured to determine, in applications installed locally, an application used below an assigned frequency within a designated period as an application to be backed up; and
a third determination unit 121c, configured to determine, in applications installed locally, an application designated by users as an application to be backed up.

Optionally, the backup module 122 may comprise:
a query unit, configured to query in the server whether the application has been backed up during installation; and
a backup unit, configured to send an installation package and data related to the application to a server for back-up if it is confirmed in the server that the application has not been backed up during installation.

Optionally, the data may comprise: data related to the application as being stored in a memory; or the data comprises: data related to the application as being stored in a memory and in a cache.

With regard to the device in the above embodiment, detailed description of specific manner for conducting operation of modules has been made in the embodiment related to the method, no detailed illustration will be made herein.

The device according to the embodiment is characterized by: determining an application to be backed up in applications installed locally; sending an installation package and data related to the determined application to a server for back-up; uninstalling locally the application and reserving an icon of the application, thus effectively saving storage space, avoiding the application from occupying storage space for a long time, and reducing waste of storage space.

Fig. 7 is a block diagram showing a device for saving storage space according to another exemplary embodiment. Referring to Fig.7, the device comprises:
a processor 701 and a memory 702 configured to store instructions executable by the processor;
wherein, the processor 701 is configured to:
determine an application to be backed up in applications installed locally;
send an installation package and data related to the determined application to a server for back-up;
uninstall locally the application and reserve an icon of the application.

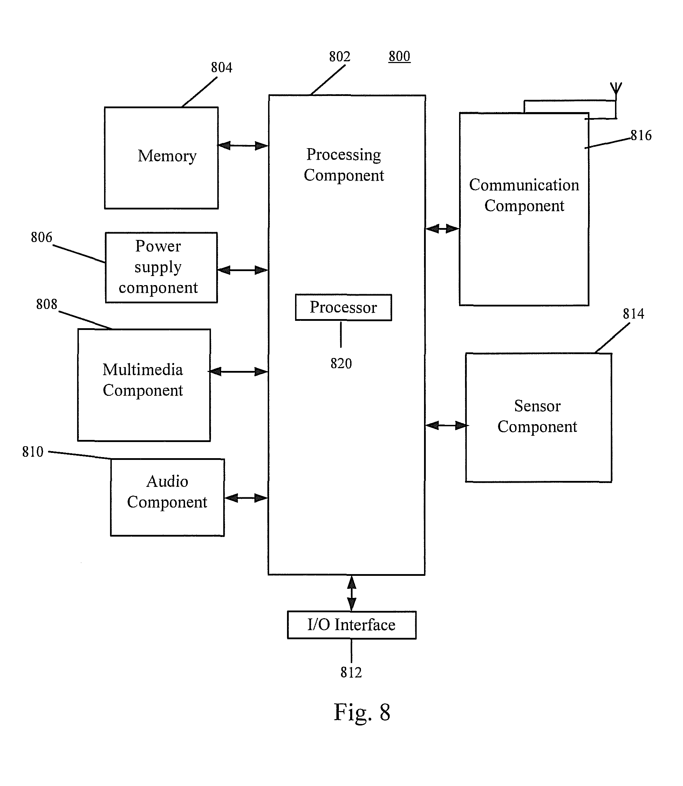

Fig. 8 is a block diagram showing a device 800 (e.g. a terminal) for saving storage space according to an exemplary embodiment. For example, the device 800 may be a mobile telephone, a computer, a digital broadcasting terminal, a message transceiver device, a games console, a tablet device, a medical device, a fitness facility, a PDA (personal digital assistant) and the like.

Referring to Fig.8, the device 800 may include one or a plurality of components as below: a processor component 802, a memory 804, a power supply component 806, a multimedia component 808, an audio component 810, an input/output (I/O) interface 812, a sensor component 814 and a communication component 816.

The processor component 802 usually controls the overall operation of the device 800, for example, display, telephone call, data communication, and operation associated with camera operation and record operation. The processor component 802 may include one or a plurality of processors 820 for executing instructions so as to complete steps of the above method in part or in whole. In addition, the processor component 802 may include one or a plurality of modules for the convenience of interaction between the processor component 802 and other components. For example, the processor component 802 may include a multimedia module for the convenience of interaction between the multimedia component 808 and the processor component 802.

The memory 804 is configured to store data of different types so as to support the operation of the device 800. Examples of the data include any application program or approach directive for operation of the device 800, including contact data, phonebook data, message, picture and video, etc. The memory 804 may be realized by volatile or non-volatile memory device of any type or combination thereof, for example, static random access memory (SRAM), electrically erasable programmable read-only memory (EEPROM), erasable programmable read only memory (EPROM), programmable read-only memory (PROM), read-only memory (ROM), magnetic memory, flash memory, magnetic disk or optical disk.

The power supply component 806 provides power for components of the device 800. The power supply component 806 may include a power management system, one or a plurality of power supplies, and other components associated with generation, management and power distribution of the device 800.

The multimedia component 808 includes a screen between the device 800 and a user and for providing an output interface. In some embodiments, the screen may include an LCD (Liquid Crystal Display) and a touch panel (TP). If the screen includes a touch panel, the screen may be realized as a touch screen for receiving input signal from users. The touch panel includes one or a plurality of touch sensors for sensing gestures on the touch panel, for example, touching and sliding, etc. The touch sensor not only can sensor trip boundary of touching or sliding, but also can detect the duration and pressure related to the touching or sliding operation. In some embodiments, the multimedia component 808 includes a front-facing camera and/or a rear-facing camera. When the device 800 is under an operation mode, for example, capture mode or video mode, the front-facing camera and/or the rear-facing camera may receive external multimedia data. Each front-facing camera and rear-facing camera may be a fixed optical lens system or have focal length and optical zoom capacity.

The audio component 810 is configured to output and/or input audio signal. For example, the audio component 810 includes a microphone (MIC); when the device 800 is under an operation mode such as call mode, record mode and speech recognition mode, the microphone is configured to receive external audio signal. The audio signal received may be further stored in the memory 804 or sent out by the communication component 816. In some embodiments, the audio component 810 also includes a loudspeaker for outputting audio signal.

The I/O interface 812 provides interface for the processor component 802 and peripheral interface modules, the peripheral interface modules may be a keyboard, a click wheel and buttons, etc. These buttons may include but not limited to: home button, volume button, start button and locking button.

The sensor component 814 includes one or a plurality of sensors for providing the device 800 with state evaluation from all aspects. For example, the sensor component 814 may detect the on/off state of the device 800, relative positioning of components, for example, the components are the displayer and keypads of the device 800; the sensor component 814 also may detect the position change of the device 800 or a component thereof, the presence or absence of users' touch on the device 800, the direction or acceleration/deceleration of the device 800, and temperature variation of the device 800. The sensor component 814 may also include a proximity detector, which is configured to detect the presence of nearby objects in case of no physical touch. The sensor component 814 may also include an optical sensor, for example, CMOS or CCD image sensor for imaging. In some embodiments, the sensor component 814 may also include an acceleration sensor, a gyro sensor, a magnetic sensor, a pressure sensor, or a temperature sensor.

The communication component 816 is configured to facilitate wired communication or wireless communication between the device 800 and other equipment. The device 800 is available for access to wireless network based on communication standards, for example, WiFi, 2G or 3G, or combination thereof. In an exemplary embodiment, the communication component 816 receives by means of a broadcast channel the broadcast signal or broadcast-related information from external broadcast management systems. In an exemplary embodiment, the communication component 816 also includes a near field communication (NFC) module for promoting short-range communication. For example, the NFC module may be realized on the basis of Radio Frequency Identification (RFID) Technology, Infrared Data Association (IrDA) Technology, Ultra-wide Bandwidth (UWB) Technology, Bluetooth (BT) Technology and other technologies.

In exemplary embodiments, the device 800 may be realized by one or a plurality of application specific integrated circuits (ASIC), digital signal processors (DSP), digital signal processing equipment (DSPD), programmable logic devices (PLD), field programmable gate arrays (FPGA), controllers, microcontrollers, microprocessors or other electronic components, configured to execute the above methods.

In exemplary embodiments, a non-transitory computer-readable storage medium including instructions is also provided, for example, a memory 804 including instructions, above instructions may be executed by the processors 820 of the device 800 so as to achieve the above methods. For example, the non-transitory computer-readable storage medium may be ROM, random access memory (RAM), CD-ROM, magnetic tape, floppy disk and optical data storage device, etc.

A non-transitory computer-readable storage medium is provided. When instructions in the storage medium are executed by the processor of a terminal (e.g. a mobile terminal), the terminal may execute a method for saving storage space, and the method comprises:
determining an application to be backed up in applications installed locally;
sending an installation package and data related to the determined application to a server for back-up;
uninstalling locally the application and reserving an icon of the application.

Optionally, the method also comprises:
downloading the installation package and data from the server when the reserved icon is clicked on;
recovering the installation of the application by using the installation package and data, and initiating the application.

Optionally, the determining an application to be backed up in applications installed locally comprises at least one of followings:
in applications installed locally, determining an application unused within a designated duration as an application to be backed up;
in applications installed locally, determining an application used below an assigned frequency within a designated period as an application to be backed up; and
in applications installed locally, determining an application designated by users as an application to be backed up.

Optionally, the sending an installation package and data related to the determined application to a server for back-up comprises:
querying in the server whether the application has been backed up during installation;
sending an installation package and data related to the application to a server for back-up if it is confirmed in the server that the application has not been backed up during installation.

Optionally, the data comprises: data related to the application as being stored in a memory; or the data comprises: data related to the application as being stored in a memory and in a cache.

The non-transitory computer-readable storage medium according to the embodiment is characterized by: determining an application to be backed up in applications installed locally; sending an installation package and data related to the determined application to a server for back-up; uninstalling locally the application and reserving an icon of the application, thus effectively saving storage space, avoiding the application from occupying storage space for a long time, and reducing waste of storage space.

## Claims

1. A method for saving storage space, **characterized in that** it comprises:
determining (S11,S21) an application to be backed up in applications installed locally;
sending (S12,S22) an installation package and data related to the determined application to a server for back-up;
uninstalling (S13,S23) locally the application and reserving an icon of the application.

2. The method of claim 1, wherein the method further comprises:
downloading (S24) the installation package and data from the server when the reserved icon is clicked on;
recovering the installation of the application by using the installation package and data, and initiating the application.

3. The method according to claim 1, wherein the determining an application to be backed up in applications installed locally comprises at least one of followings:
in the applications installed locally, determining (S31) an application unused within a designated duration as the application to be backed up;
in the applications installed locally, determining (S32) an application used lower than an assigned frequency within a designated period as the application to be backed up; and
in the applications installed locally, determining (S33) an application designated by users as the application to be backed up.

4. The method according to claim 1 or 2, wherein sending an installation package and data related to the determined application to a server for back-up comprises:
querying in the server whether the application has been backed up during installation;
sending the installation package and data related to the application to a server for back-up if it is confirmed in the server that the application has not been backed up during installation.

5. The method according to any of claims 1 to 3, wherein the data comprises: data related to the application stored in a memory; or the data comprises: data related to the application stored in a memory and in a cache.

6. A device (800) for saving storage space, **characterized in that** it comprises:
a determination module (121), configured to determine an application to be backed up in applications installed locally;
a backup module (122), configured to send an installation package and data related to the determined application to a server for back-up; and
an uninstall module (123), configured to uninstall locally the application and reserving an icon of the application.

7. The device of claim 6, wherein the device further comprises:
a recovery module (124), configured to download the installation package and data from the server when the reserved icon is clicked on; recover the installation of the application by using the installation package and data, and initiate the application.

8. The device according to claim 6 or 7, wherein the determination module (121) comprises at least one of:
a first determination unit (121a), configured to determine, in the applications installed locally, an application unused within a designated duration as the application to be backed up;
a second determination unit (121b), configured to determine, in the applications installed locally, an application used lower than an assigned frequency within a designated period as the application to be backed up; and
a third determination unit (121c), configured to determine, in the applications installed locally, an application designated by users as the application to be backed up.

9. The device according to any of claims 6 to 8, wherein the backup module (122) comprises:
a query unit, configured to query in the server whether the application has been backed up during installation;
a backup unit, configured to send the installation package and data related to the application to a server for back-up if it is confirmed in the server that the application has not been backed up during installation.

10. The device according to any of claims 6 to 9, wherein the data comprises: data related to the application stored in a memory; or the data comprises: data related to the application stored in a memory and in a cache.

11. A computer program, which when executing on a processor (701,802), performs the method according to any one of claims 1 to 5.

12. A computer program product stored on a computer usable medium, comprising computer-readable program means for causing a terminal to implement the method according to any one of claims 1 to 5.
